# EUROPEAN PATENT SPECIFICATION

(11) **EP 4 363 269 B1**
(45) Date of publication and mention of the grant of the patent: **01.10.2025**
(21) Application number: 22736271.2
(22) Date of filing: 29.06.2022
(51) Int. Cl.: B60P 1/28, B62D 29/00, B29C 65/00, B29C 65/02, B29L 31/30, B29L 31/00, B62D 33/02

(54) **CONTAINERS FOR BULK MATERIAL**
BEHÄLTER FÜR SCHÜTTGUT
RÉCIPIENTS POUR MATÉRIAU EN VRAC

(30) Priority: 30.06.2021 GB 202109476
(43) Date of publication of application: 08.05.2024
(73) Proprietor: Goliath Mouldings Limited, Rayleigh, Essex SS67BS (GB)
(72) Inventor: ECOB, Christopher Graham, Aylesbury Buckinghamshire HP21 7JZ (GB)
(74) Representative: FRKelly
(86) International application number: PCT/EP2022/067955
(87) International publication number: WO 2023/275171

(56) References cited:
- DE-U1- 202018 104 175
- FR-A3- 3 100 764
- US-A1- 2003 160 049
- US-A1- 2013 069 417

## Description

### Field of the Disclosure

The present disclosure relates to containers for holding bulk material. Aspects of the present disclosure relate to a vehicle comprising a container for holding bulk material.

### Background of the Disclosure

Containers are used in various different forms and application for holding bulk material. For example, road-going vehicles may include a container in the form of an open bed for transporting bulk materials such as building materials or waste, and standalone transportable containers, or skips, may be deployed for collection and transportation of building waste. Such containers are required to be relatively sturdy and durable, and are conventionally formed from metal, such as steel, which tends to provide the required rigidity and durability. US 2013/069417 A1 discloses a container similar to the pre-amble of claim 1.

### Summary of the Disclosure

Containers used for holding bulk material, such as a truck bed or skip, are required to be relatively sturdy and durable, and are conventionally formed from metal, such as steel, which tends to provide the required rigidity and durability. However, the forming of such containers from metal incurs certain operational disadvantages. For example, metals such as steel may tend to be acoustically noisy, resulting in high noise levels during loading of material; they may tend to be permanently deformed, e.g., dented, if subjected to excessively high loading; and they may tend to be susceptible to chemical corrosion and oxidation. Metal may additionally be relatively heavy, which in the case of a transportable container, such as a container on a vehicle or a portable skip, may result in increased consumption of fuel by the vehicle, and/or may reduce the permissible payload of the vehicle. Metal may additionally have a relatively high coefficient of friction, particularly if the surface of the metal is worn, damaged or corroded, which may impede tipping of bulk materials from the container.

A conventional bulk container may be lined with a protective material, such as plastic, to counteract certain of the aforementioned disadvantages, for example, to counter the tendency of metal to corrode if exposed to corrosive chemicals. However, such a liner may increase the complexity and so cost of the container, and further the additional plastic material may increase the mass of the container, and thereby reduce the permissible payload of a vehicle carrying the container.

An objective of the present disclosure is to provide an improved container for holding bulk material, e.g., a truck bed or skip. In particular, an objective of the present disclosure is to provide a container having a hybrid plastic-metal construction, whereby certain of the aforementioned disadvantages of conventional containers may be obviated by the use of plastic in substitute of metal to form the container, but in which the rigidity and durability of the container is obtained by the strategic use of metal to reinforce the plastic.

The foregoing and other objectives are achieved by the features of the independent claims. Further implementation forms are apparent from the dependent claims, the description and the Figures.

A first aspect of the present disclosure provides a container for holding bulk material, comprising: a floor and walls formed of plastic, and a frame supporting the floor and the walls, wherein the frame comprises a plurality of spaced-apart metal frame members separated by open areas, and the floor and walls are attached to the frame members and span the open areas to bound a volume suitable for holding bulk material, wherein the floor is attached to a frame member by at least one fixing extending through the floor to the frame member, an end of the fixing is countersunk into the floor, and the countersink is filled with plastic to cover the end of the fixing.

Forming the floor and walls of the container from plastic confers certain operational advantages. For example, plastics, such as high-density polyethylene (HDPE) may tend to be acoustically dull, thereby resulting in low noise emission when loading the container with bulk material. Additionally, such plastics may tend to be relatively elastically deformable and otherwise resistant to deformation, and may thereby be relatively insusceptible to mechanical damage. Additionally, such plastics may tend to be relatively chemically inert, and so may tend to be relatively insusceptible to chemical damage, e.g., oxidation or corrosion. Additionally, such plastics may tend to be relatively low weight, which may reduce the mass of the container, and so reduce the energy required to transport the container, and thus reduce the fuel consumption of such as vehicle, and may further increase the permissible payload of a vehicle transporting the container. Such plastics may additionally have a relatively low coefficient of friction, typically lower than metal such as steel, both as a result of inherently low surface friction characteristics, and further due to the aforementioned resistance of many plastics to surface degradation through mechanical or chemical damage. This low coefficient of friction may advantageously aid tipping of bulk materials from the container. This latter characteristic may be particularly desirable where the container is deployed as a tipping bed, e.g., as a bed on a tipper-truck, inasmuch that tipping of a load may be achieved using a relatively low tip angle, thereby reducing the risk of toppling of the truck caused by excessively high tipping angles.

Plastics, such as HDPE, may however be undesirably flexible. Such flex is however advantageously countered by the present disclosure by the provision of a metal flame for supporting the plastic floor and walls. The flame supports the floor and walls of the container with respect to a surface on which the container is located. Moreover, because the plastic floor and wall are attached to the frame members, instead for example of being merely located on the flame members, the flame members are themselves reinforced by the plastic floor and wall, inasmuch that spreading of the frame members under load may be avoided by the floor and/or wall panels tying the frame members together.

The present disclosure may be distinguished from a simpler plastic liner located in a metal container inasmuch that the frame of the present disclosure comprises spaced-apart members separated by open areas. In other words, the flame of the present disclosure does not itself define a floor and walls of the container for holding bulk material. Instead, the frame of the present disclosure provides strategically placed metal frame members, which perform the function of supporting the plastic floor and walls whilst minimising metal usage. This hybrid construction thus advantageously combines the mutually different structural properties of plastic and metal. The result is a container which achieves the aforementioned advantages by the use of plastic for forming the floor and walls, e.g., resistance to corrosion, low-noise loading, and low mass, whilst maintaining a desired structural rigidity by the metal frame.

In examples, the container could be an open bed type container, comprising a floor and walls but an open top. In other examples, the container could be a closed container, i.e., further comprising a roof. In examples, the container may comprise walls extending around a full circumference of the floor, e.g., four walls extending around all four sides of a square floor. In other examples, the container could comprise an opening between the walls. For example, the container could be cuboid shape, and comprise three walls closing three sides and an open side.

The plastic walls and floor should be formed of a plastic that is relatively sturdy and resistant to chemical corrosion. Suitable plastics include acrylonitrile butadiene styrene (ABS), nylon, and composite plastics. In an implementation however, the floor and the walls are formed of high-density polyethylene (HDPE). HDPE has been found to provide desired structural characteristics for the application, e.g., relatively high rigidity and relatively low coefficient of friction.

In an implementation, the frame members comprise box sections. The box sections may advantageously exhibit relatively high strength-to-mass characteristics, and thereby provide good support to the floor and the walls.

The fixing may be conveniently provided to fix the floor to the frame member. Countersinking of the fixing, e.g., the fixing head, into the floor reduces the risk of snagging of the fixing on the bulk material load, thereby reducing the risk of damage to the fixing and reducing friction between the container and the load, facilitating easy tipping of the load therefrom. The plastic covering advantageously performs two functions. Firstly, the covering may protect the fixing, which may for example be a metal bolt, from being damaged, e.g., chemically corroded, by the load. Secondly, in view of the reality that the plastic of the floor and the walls may be mechanically worn by use, the plastic covering may additionally serve as a convenient wear indicator. The plastic covering may be expected to wear at an approximately similar rate to the floor and walls, in particular where the plastic covering is a similar or same material as the plastic of the floor and walls. Thus, wearing of the covering to reveal the fixing may be interpreted as a visual indicator that the walls and floor are excessively worn and require repair or replacement.

In an implementation, the countersink is filled with the same plastic as the floor. The plastic filler may thus be expected to wear at the same rate as the floor, and so accurately reflect the state of wear of the floor.

In an implementation, the floor and the walls are releasably attached to the frame members. For example, the floor and the walls could be releasably attached to the frame members by threaded fixings, such as bolts. The releasable attachment permits convenient installation and replacement of the floor and walls. This is particularly desirable given that the plastic floor and walls may tend to susceptible to relatively high mechanical wear in use. Thus, this feature may advantageously facilitate convenient replacement of the floor and walls when excessively worn.

In an implementation, the floor and the walls comprise plural sections of plastic, wherein the plural sections of plastic are mechanically joined. For example, the floor could be formed by one or more plastic panels, and the walls could be formed by one or more further panels. This modular construction may facilitate convenient handling of the components of the container during manufacture, inasmuch that the individual panels may be easier to manually handle than the complete floor and wall assembly. Additionally, this modular construction may facilitate convenient replacement of one or more of the sections if the sections become worn following use.

In an implementation, the plural sections are mechanically joined by plastic-welding. The mechanical join may improve the rigidity of the wall and floor structure. Additionally, the mechanical join may improve the containment of bulk materials therein.

In an implementation, the plural sections are mechanically joined at abutting edges, the abutting edges are shaped to define a tapered cavity between the abutting edges, and the tapered cavity is filled with plastic material joining the sections. The tapered cavity may advantageously facilitate good penetration of the filler plastic into the joint, thereby providing a good mechanical connection between the sections.

In an implementation, the plural sections are mechanically joined by a water-tight join. The watertight join may advantageously contain liquids within the container, thereby reducing the risk of contamination of the local environment.

In an implementation, the floor and/or at least one of the walls comprises a bend, wherein the bend is coincident with a groove in the section extending partially through a thickness of the section. The bend facilitates forming of walls to the container in different planes from a same material piece. The groove facilitates bending of the material. Because the groove extends only partially through the thickness of the section, alignment of the portions of the section either side of the bend is maintained during assembly, and furthermore the water-tightness of the bend is ensured.

In an implementation, the groove is filled with plastic material joining portions of the floor and/or the wall on opposing sides of the bend. The filler plastic joining the portions of the piece on either side of the bend improves the mechanical connection between the two portions, thereby strengthening the bend and reducing the risk of failure in use. For example, a plastic welding operation could be performed on the bend, whereby molten plastic filler material is used to fill the groove and join the portions.

In an implementation, the container is mounted on a road-going vehicle for transporting bulk material. In other words, the container could form a part of a truck for carrying bulk materials,
such as bulk building materials, e.g., sand, soil or hardcore. For example, the truck could be a tipper-truck, in which the container is tippable relative to a chassis of the vehicle to tip a load from the container. In such a tipper application, the use of a plastic for the floor and the walls of the container may advantageously reduce a coefficient of friction between the floor and walls of the container and the load, thereby reducing the angle by which the container is required to be tipped to tip the load.

In other words, the present disclosure extends to a road-going vehicle comprising the container of any of the preceding statements.

In an implementation, the container may further comprise a lifting mechanism for lifting the container relative to a chassis of the road-going vehicle to cause the container to tip to facilitate tipping of bulk material from the container.

A second aspect of the present disclosure provides a method of constructing a container for holding bulk material, the method comprising obtaining a floor and walls formed of plastic, obtaining a frame for supporting the floor and walls, wherein the frame comprises a plurality of spaced-apart metal frame members separated by open areas, attaching the floor and walls to the frame members to span the open areas, such that the floor and the walls are supported by the frame to bound a volume suitable for holding bulk material, attaching the floor to a frame member of the frame by at least one fixing extending through the floor to the frame member such that an end of the fixing is countersunk into the floor, and filling the countersink with plastic to cover the end of the fixing.

In other words, the method involves obtaining a pre-formed frame, and locating the floor and walls on the frame to form the container. This method may advantageously ease construction of container, inasmuch that the floor and walls may be conveniently supported by the frame following attachment.

In an implementation, the filling the countersink comprises filling the countersink with the same plastic as the floor.

In an implementation, the attaching the floor and walls to the frame members comprises releasably attaching the floor and walls to the frame members.

In an implementation, the obtaining a floor and walls comprises obtaining a floor and walls formed in plural sections, and the attaching the floor and walls to the frame members comprises individually mounting the plural sections on the frame members to be supported thereby and attaching the plural sections to the frame members. This multi-section construction of the floor and walls may advantageously ease construction of the container, inasmuch that handling of the individual sections may be relatively easier than handling a complete floor and wall assembly, and mounting of the individual sections on the frame may similarly be easier than mounting a complete wall and floor assembly on the frame.

In an implementation, the obtaining a floor and walls comprises obtaining a floor and walls formed in plural sections, and the method comprises mechanically joining the **plural** sections.

In an implementation, the method comprises individually mounting the plural sections on the frame members to be supported thereby and mechanically joining the plural sections in-situ on the frame members. Mounting of the sections on the frame individually may advantageously be relatively easier than mounting of the complete wall and floor assembly on the frame. Mechanically joining the plural sections may advantageously improve the structural strength of the container, and in particular reduce the risk of the plural sections moving apart in use. Moreover, mechanically joining the plural sections, e.g., by plastic-welding or adhesive, in-situ on the frame may advantageously ensure correct alignment of the sections, inasmuch that the relative positions of the sections may be maintained by the frame.

In an implementation, the mechanically joining the plural sections comprises plastic- welding the plural sections together.

In an implementation, the plastic-welding the plural sections together comprises mounting a plastic-welder located on a track in the container and moving the plastic welder along the track to progressively plastic-weld the plural sections together. This may advantageously allow convenient welding of the sections. In particular, the support and guidance provided to the welding nozzle by the track may advantageously ensure a consistent weld along the length of the join, thereby reducing the risk of failure of the weld in use.

In an implementation, the obtaining a floor and walls formed in plural sections comprises shaping edges of the plural sections to define a tapered cavity when abutted, the mounting the plural sections on the frame comprises abutting the plural sections such that a tapered cavity is defined between abutting edges, and the mechanically joining the plural sections comprises filling the cavity with plastic material to join the sections. For example, a router or another tool for abrading the sections may be used to shape the tapered edges to form the cavity. The tapered cavity may advantageously facilitate good penetration of the filler plastic into the joint, thereby providing a good mechanical connection between the sections.

In an implementation, the obtaining a floor and walls comprises cutting a groove in the floor and/or at least one of the walls that extends partially through the thickness of the piece, and bending the piece about the groove to form a bent portion.

In an implementation, the method further comprises filling the groove with plastic material to join portions of the piece on opposing sides of the bend.

In an implementation, the method further comprises constructing the container on a road-going vehicle for transporting bulk material.

These and other aspects of the disclosure will be apparent from the embodiments, described below.

### Brief Description of the Drawings

In order that the present invention may be more readily understood, embodiments of the disclosure will now be described, by way of example, with reference to the accompanying drawings, in which:
Figures la and lb show schematically an example of a vehicle comprising a container for holding bulk material embodying an aspect of the present disclosure;
Figure 2 shows schematically the container in isolation in a perspective view, showing the body and the frame of the container;
Figures 3a and 3b show schematically the body and the frame of the container respectively in perspective views;
Figure 4 shows schematically the body and the frame of the container in an exploded perspective view, showing the plural sections of the body of the container;
Figure 5 shows schematically the container in an end cross-sectional view, showing the attachment of the plural sections of the body of the container to the frame, and showing the joining together of the plural sections;
Figures 6a and 6b show schematically a plastic welding machine usable for plastic-welding the plural sections of the body of the container;
Figure 7 shows example processes involved in a method of constructing the vehicle previously identified with reference to Figure 1, including steps of attaching the floor and walls to the frame and mechanically joining the floor and walls;
Figure 8 shows example processes involved in the step of attaching the floor and walls to the frame; and
Figure 9 shows example processes involved in the step of mechanically joining the floor and walls.

### Detailed Description of the Disclosure

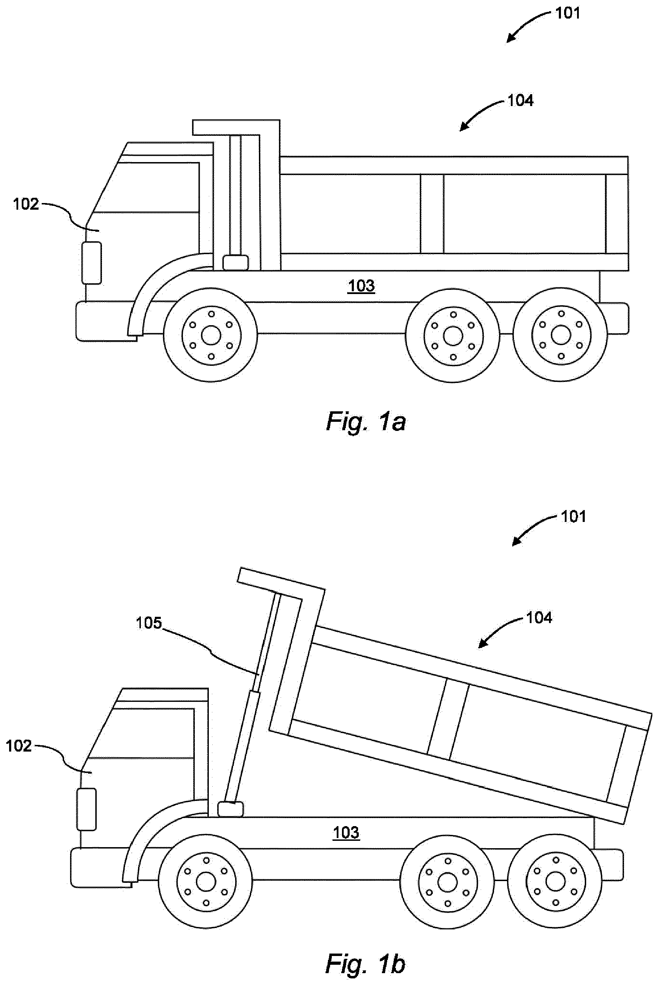

Referring firstly to Figures 1a and 1b together, a road-going vehicle 101, embodying an aspect of the present disclosure comprises a base vehicle 102 including a chassis, indicated generally at 103, and a container 104 mounted on the chassis of the base vehicle for holding bulk material. In the example therefore, the vehicle 101 is a truck for transporting bulk material, such as building materials e.g., aggregate, or waste. In the particular example, as depicted in Figure 1b, vehicle 101 is a tipper-truck, in which the container 104 is pivotably mounted on the chassis 103 of the base vehicle 102, and the base vehicle 102 further comprises a lifting mechanism 105 for lifting an end of the container relative to the chassis of the base vehicle, to thereby tip the container 104 to empty bulk material from the container.

Although aspects of the present disclosure are described herein in the context of a truck comprising a container for transporting bulk material, it should be appreciated that the container of the present disclosure has far broader utility. For example, containers embodying the present disclosure could usefully be deployed as standalone receptacles for collecting waste, i.e., as skips, or as wheeled trailers for transporting bulk material, e.g., farm trailers, or instead as hoppers for holding bulk material in industrial machinery, etc.

The use of the term bulk material herein refers to large masses of material, i.e., masses of at least ten kilograms, possibly up to or more than several tens, hundreds or thousands of kilograms. References herein therefore to containers for holding such material are to containers suitable for holding such masses of material, e.g., loose particulate material. Such containers are likely to find utility, for example, in storing and/or transporting loose particulate building materials, waste, and/or particulate feed material in industrial processes. The present disclosure thus encompasses in particular containers suitable for holding such masses, i.e., upwards of ten kilograms, of loose particulate material, such as particulate building materials, e.g. aggregate, waste, and/or particulate feed material for an industrial process.

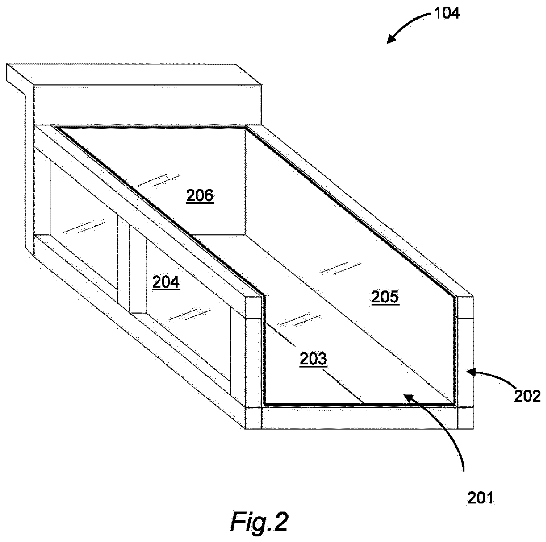

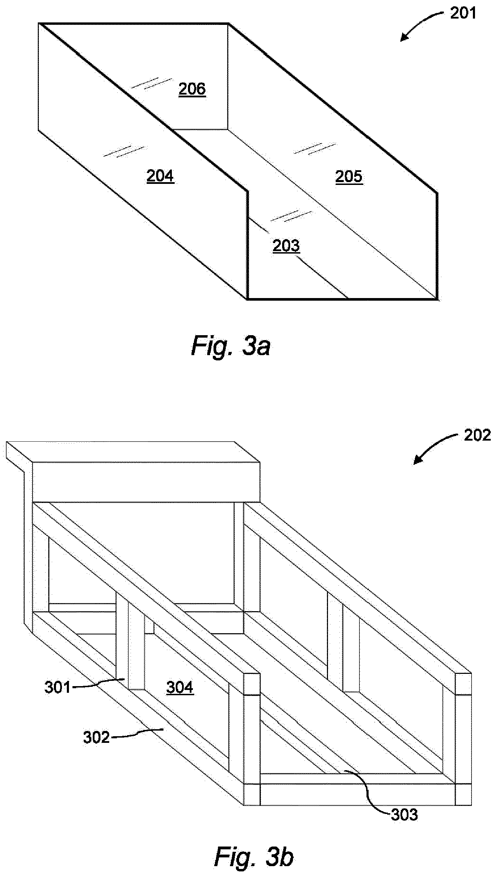

Referring next to Figures 2 and 3a and 3b collectively, in examples the container 104 has a hybrid metal-plastic construction. Specifically, in the example, the container 104 comprises a plastic body 201 and a supporting frame 202 for supporting the floor and walls on the vehicle chassis.

Body 201 has a generally bucket-like form and comprises floor 203 and three walls 204 to 206. The floor 203 and walls 204 to 206 are formed of sheet plastic. In examples, the floor 203 and walls 204 to 206 are formed of high-density polyethylene (HDPE). In examples, the floor and walls have a section thickness of approximately 20 millimetres.

The frame 202 comprises a plurality of spaced-apart metal frame members, for example, frame members 301, 302 and 303. The spacing of the frame members results in open areas, such as open areas 304, between adjacent members. Frame 202 thus has a generally 'skeleton' form, in which the frame members form 'ribs' which support the . The purpose of this 'skeleton' form of the frame 202 is to minimise the structure of the frame, and in particular to minimise the mass of the frame. In examples, the frame members are formed of box-section metal, e.g., mild steel.

The floor 203 and walls 204, 205 of the body 201 are located in the frame 202, attached to the frame members, e.g., frame members 301 to 303, and the floor and walls span the open areas between the frame members, e.g., open area 304, to thereby close the open areas to define a 'bucket' suitable for holding bulk material. The plastic construction of the floor and walls has various operational advantages. For example, plastics, such as high-density polyethylene (HDPE) may tend to be acoustically dull, thereby resulting in low noise emission when loading the container with bulk material. Additionally, such plastics may tend to be relatively elastically deformable and otherwise resistant to deformation, and may thereby be relatively insusceptible to mechanical damage. Additionally, such plastics may tend to be relatively chemically inert, and so may tend to be relatively insusceptible to chemical damage, e.g., oxidation or corrosion. Additionally, such plastics may tend to be relatively low weight, which may reduce the mass of the container, and so reduce the energy required to transport the container, and thus reduce the fuel consumption of such a vehicle, and may further increase the permissible payload of a vehicle transporting the container. Such plastics may additionally have a relatively low coefficient of friction, typically lower than metal such as steel, both as a result of inherently low surface friction characteristics, and further due to the aforementioned resistance of many plastics, such as HDPE, to surface degradation through mechanical or chemical damage. This low coefficient of friction may advantageously aid tipping of bulk materials from the container. This latter characteristic may be particularly desirable in the example application, where the container 104 is deployed as a tipping bed for a truck, inasmuch that tipping of a load may be achieved using a relatively low tip angle, thereby reducing the risk of toppling of the truck 101 caused by excessively high tipping angles.

A potential issue may be encountered however by forming the floor 203 and the walls 204 to 206 from plastic, such as HDPE, inasmuch that plastics may be undesirably flexible. Such flex is however advantageously countered by the present disclosure by the provision of the metal frame 202 for supporting the plastic floor and walls. The metal frame 202 may be desirably rigid. Thus, in the present disclosure, the metal frame 202 supports the plastic floor 203 and walls 204 to 206 to reduce flex of the floor and walls. However, because the metal frame 202 is not required to additionally contain the load, that function being performed by the plastic floor and walls, the structure of the metal frame may permissibly be minimised, e.g., by spacing apart of the frame members leaving open areas in the metal frame. This minimising of the structure of the frame may advantageously minimise the cost and mass of the frame, and thereby of the container as a whole. Minimising the cost and/or mass of containers is generally desirable in many commercial applications. In the example application, whereby the container is mounted on a vehicle for transportation thereby, specific advantages result, in terms of the reduced mass of the container, which may increase the permissible payload of the vehicle, and/or reduce the energy required to move the container, and so reduce the fuel consumption of the vehicle.

The attaching of the plastic floor and walls to the frame members, instead for example of floor and walls being merely located on the frame members, has the advantage that the frame may be reinforced by the plastic floor and walls. In particular, the floor and walls may tend to tie the frame members 301 to 303 together, and thereby inhibit the tendency of the frame members to spread under load.

In the example, the container 104 comprises four sides, namely, floor 203, side-walls 204, 205, and front-wall 206. In other examples, the container 104 may comprise a different number of sides. For example, in other embodiments, container 104 could comprise a roof panel to close the open top, and/or a rear wall, or hinged tailgate, to close the open rear. The particular construction of the container will depend on its application. In the illustrated example, the container 104 has an open top to permit convenient loading of bulk material, and an open rear to facilitate convenient tipping of the bulk material. If, for example, the container 104 were intended for carrying goods susceptible to damage by rain or other environmental contaminants, the container may additionally be provided with a roof and a rear wall to close the internal volume.

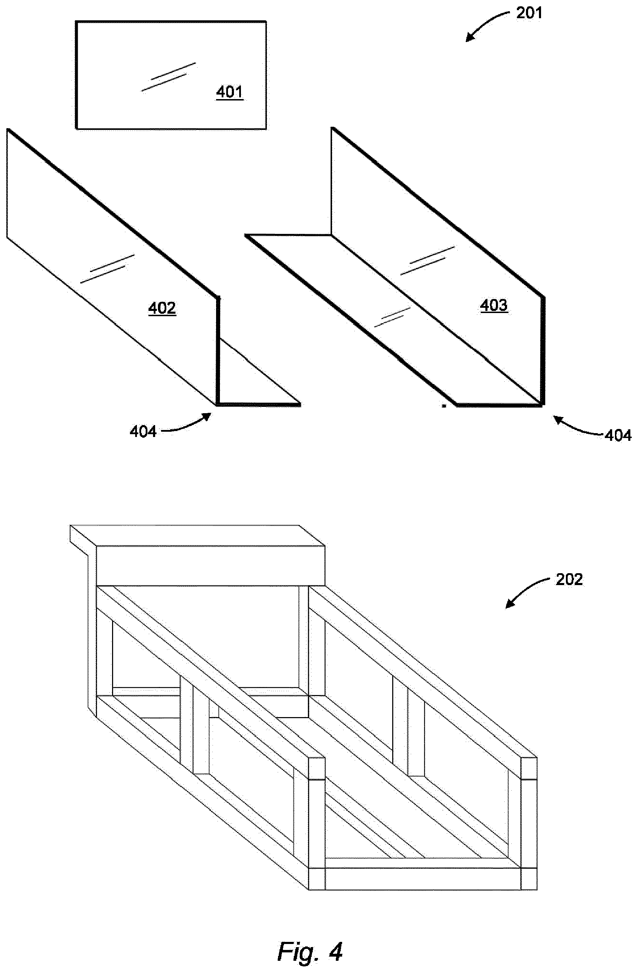

Referring next to Figure 4, in the example the floor 203 and walls 204 to 206 of the container are formed in plural sections, or panels, from sheets of plastic. Specifically, in the example, the floor and walls of the container are formed from front section, or panel, 401, and left and right sections, or panels, 402, 403 respectively. In the example, the left and right sections 402, 403 each comprise a ninety-degree bend 404, such that the left and right sections 402, 403 form both a portion of the floor and a respective side wall of the container. In other examples, the floor and walls could be formed of a greater or lesser number of sections. For example, the floor and walls could be formed of a single moulded section of plastic.

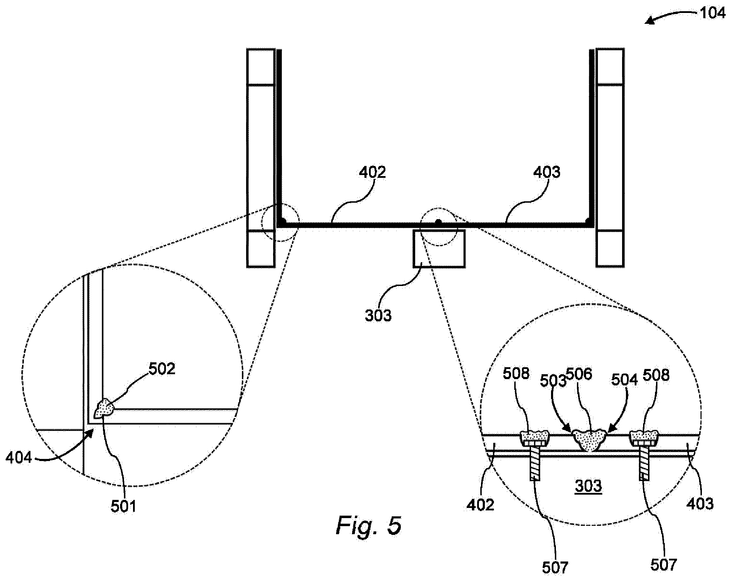

Referring next to Figure 5, in the example, the plural sections 401 to 403 that form the floor and walls are releasably attached to the frame 202, and additionally the sections are mechanically joined to one another.

In examples, the bend 404 of each of the left and right sections 402, 403 is formed by a longitudinal groove 501 cut in the respective panel to extend partially but not fully through the thickness of the panel. The panel is then subsequently bent about the groove to form different planes. The groove facilitates convenient bending of the panel. The groove, when the bend is formed, leaves a tapered, generally V-shaped, groove between opposing portions of the panel. In examples, as will be described with reference to later Figures, following bending of the panel about the groove, the groove is filled with filler plastic material 501, for example, HDPE, e.g., by a plastic-welding technique in which heated filler plastic is forced into the groove, to fill the groove and mechanically join the opposing portions of the panel 402.

In examples, the plastic sections 401 to 403 are formed with one or more chamfered edges. For example, the abutting edges 503 and 504 of the left and right sections 402, 403 respectively are chamfered such that when the panels are abutted in their installed positions, a tapered cavity 505 is defined between the abutting edges. The tapered cavity 505 may then be filled with filler plastic material 506, for example, HDPE, e.g., by a plastic-welding technique in which heated filler plastic is forced into the cavity, to fill the cavity and mechanically join the adjacent panels.

In examples, each of the sections 401 to 403 is releasably joined to one or more of the frame members of the frame 202 by threaded fixings, i.e., bolts. For example, the left and right sections 402, 403, forming the floor and the side walls, are releasably fixed to frame member 303 of the frame by bolts 507 which extend through apertures in the floor, and in which heads of the bolts are countersunk in countersinks. The countersinks may then be filled with filler plastic 508, for example, HDPE, e.g., by a plastic-welding technique in which heated filler plastic is forced into the countersink, to fill the countersink and cover the head of the bolt. The plastic covering advantageously performs two functions. Firstly, the covering may protect the bolt from being damaged, e.g., chemically corroded, by the load. Secondly, in view of the reality that the plastic of the floor and the walls may be mechanically worn by use, the plastic covering may additionally serve as a convenient wear indicator. The plastic covering 508 may be expected to wear at an approximately similar rate to the floor and walls, in particular where the plastic covering is a similar or same material as the plastic of the floor and walls. Thus, wearing of the covering to reveal the fixing may be interpreted as a visual indicator that the walls and floor are excessively worn and require repair or replacement.

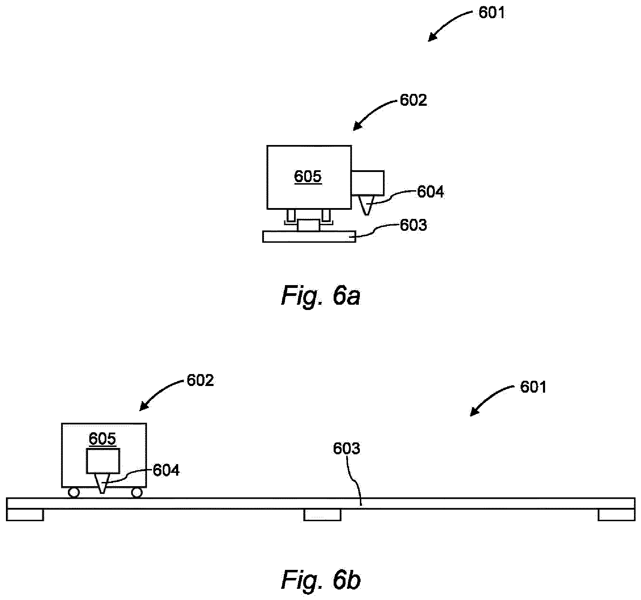

Referring next to Figures 6a and 6b the plural sections 401 to 403 of the body 201 of the container may conveniently be joined, and the grooves 501 and the cavities 505 filled, by plastic welding, using a plastic welding machine embodying an aspect of the present disclosure.

In the example, the plastic welding machine 601 comprises a plastic welding module 602 movably mounted on a linear track 603.

The welding module 601 comprises a nozzle 604 for discharging heated filler plastic, and an on-board feed module 605 having an internal store of filler plastic for feeding to the nozzle, and a heater for heating the filler plastic.

By movably mounting the welding module 602 on the track 603, the track may support the welding module, and in particular the nozzle 604, above a surface to be welded, and the track may guide movement of the welding module 602 along the length of a longitudinal weld. The support and guidance provided by the track may advantageously facilitate a precise and consistent plastic weld along the length of a join.

As will be described in further detail with reference to later Figures, the welding machine 601 finds particular utility in the present context in in-situ joining of the plural sections 401 to 403 of the body of the container, and in filling the grooves 501.

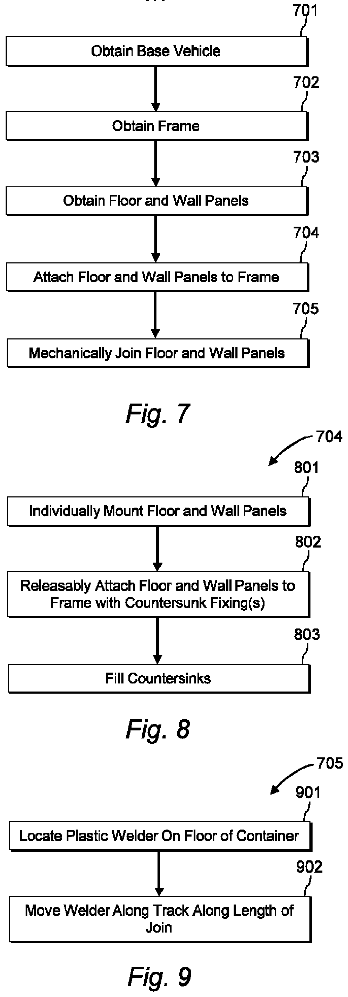

Referring to Figure 7, in examples a method of constructing the vehicle 101 comprises five stages. Stage 701 relate to obtaining the base vehicle 102, whilst stages 702 to 705 relate to constructing the container 104. It should thus be appreciated that stages 702 to 704 have wider applicability to constructing containers embodying the present disclosure other than vehicle mounted containers. For examples, stages 702 to 705 could be followed, absent prior stage 701, to construct a standalone container, e.g., a skip, embodying an aspect of the present disclosure.

At stage 701 the base vehicle 102 is obtained. For example, stage 701 may involve constructing the base vehicle 102. Alternatively, in a situation where the container is to be retrofitted to a pre-built vehicle, or where the container is to be constructed to replace an existing vehicle-mounted container, stage 701 may involve obtaining a pre-built vehicle.

At stage 702, the frame 202 of the container is obtained. Stage 702 could, for example, involve building the frame 202. For example, stage 702 could involve obtaining box section metal, such as steel, cutting and otherwise shaping the box section to form the frame members, and subsequently welding the frame members together to form the frame. Alternatively, where the method relates to repairing or restoring an existing container embodying the disclosure, stage 702 could involve obtaining a pre-built frame. In such as scenario stages 701 and 702 could be combined, i.e., a vehicle having a pre-built frame mounted thereon could be obtained.

At stage 703, the floor and wall sections 401 to 403 are obtained. Stage 703 could, for example, involve forming the sections, e.g., by shaping plastic sheet, such as HDPE sheet. Stage 703 could, for example, involve cutting the grooves 501, forming the bends 404 about the grooves, and/or chamfering the abutting edges 503, 504 of the sections.

At stage 704, the floor and wall sections 401 to 403 are attached to the frame 202 obtained at stage 702. Stage 704 could, for example, involve an operative manually locating the panels in a desired position on the frame, and subsequently attaching the panels to the frame.

At stage 705, the floor and wall sections 401 to 403 are mechanically joined to one another. For example, stage 705 could involve joining the plural sections by plastic welding, e.g., by plastic welding the abutting edges 503, 504 of the left and right sections 402, 403, as depicted in Figure 5.

Referring next to Figure 8, in examples, the method of step 704 for attaching the floor and wall panels 401 to 403 to the frame 202 involves three stages.

At stage 801, the floor and wall sections 401 to 403 are mounted to the frame individually. For example, an operative could manually mount each of the sections to the frame individually. Individually mounting the sections to the frame prior to joining of the sections on the frame may advantageously facilitate easier construction of the container, inasmuch that the individual sections may be relatively easier to handle than the complete wall and floor assembly, and additionally the frame may conveniently maintain a desired positional relationship of the sections prior to their joining, i.e., the frame may act as a jig. As an alternative however, the floor and wall sections could be assembled and joined away from the frame, and subsequently mounted on the frame at stage 704. Stage 801 could, for example, additionally involve forming the bends 404 in the sections 402, 403.

At stage 802, the floor and wall sections 401 to 403 are releasably attached to the frame 202. For example, stage 802 may involve forming apertures through which fixings, such as bolts 507, may be passed to engage the frame, as depicted in Figure 5. As depicted in Figure 5, stage 802 may involve forming countersinks at ends of the apertures to allow countersinking of the heads of bolts below a surface plane of the panels.

At stage 803, the countersinks formed at stage 802 may be filled, e.g., by plastic-welding, to thereby cover the heads of the fixings for protect the fixings in use. For example, stage 803 could involve filling the countersinks with the same plastic from which the panels 401 to 403 are formed, e.g., HDPE. Filling the countersinks with the same plastic as the plastic of the panels has the effect that the plastic covering may be expected to wear at an approximately similar rate to the floor and walls, and thus wearing of the covering to reveal the fixing may be interpreted as a visual indicator that the walls and floor are excessively worn and require repair or replacement.

Referring finally to Figure 9, in examples, the method of step 705 for mechanically joining the floor and wall panels 401 to 403 to one another involves two stages.

At stage 901, the welding machine described with reference to Figures 6a and 6b is loaded into the container to sit on the floor 203 with the track 603 extending in length parallel to the length of the joins to be welded, e.g., the groove 501 and/or the cavity 505, and such that the nozzle 604 is supported above and in close proximity to a join to be welded.

At stage 902, the welding module 605 is moved progressively along the track 603 by an operative, to thereby plastic weld a join. For example, where the track extends along the floor beside the central join between the left and right sections 402, 403, the welding module 605 may plastic weld the abutting edges 503, 504 of the panels, thereby also filling the cavity 505.

Although the present invention and its advantages have been described in detail, it should be understood that various changes, substitutions and alterations can be made herein without departing from the spirit and scope of the invention as defined by the appended claims. In the claims, the word "comprising" does not exclude other elements or steps, and the indefinite article "a" or "an" does not exclude a plurality.

## Claims

1. A container (104) for holding bulk material, comprising: a floor (203) and walls (204, 205, 206) formed of plastic, and a frame (202) supporting the floor and the walls, wherein the frame (202) comprises a plurality of spaced-apart metal frame members (301, 302, 303) separated by open areas (304), and the floor (203) and walls (204, 205, 206) are attached to the frame members and span the open areas to bound a volume suitable for holding bulk material, wherein the floor (203) is attached to a frame member by at least one fixing (507) extending through the floor (203) to the frame member, **characterised in that** an end of the fixing is countersunk into the floor. and the countersink is filled with plastic to cover (508) the end of the fixing.

2. The container of claim 1,
wherein the floor (203) and the walls (204, 205, 206) are formed of high-density polyethylene (HDPE); or
wherein the frame members (301, 302, 303) comprise box-sections.

3. The container of claim 1, wherein the countersink is filled with the same plastic as the floor (203).

4. The container of any one of the preceding claims, wherein the floor (203) and the walls (204, 205, 206) are releasably attached to the frame members (301, 302, 303).

5. The container of any one of the preceding claims, wherein the floor (203) and the walls (204, 205, 206) comprise plural sections (401, 402, 403) of plastic, wherein the plural sections of plastic are mechanically joined.

6. The container of claim 5,
wherein the plural sections (401, 402, 403) are mechanically joined by plasticwelding; or
wherein the plural sections (401, 402, 403) are mechanically joined at abutting edges, the abutting edges are shaped to define a tapered cavity between the abutting edges, and the tapered cavity is filled with plastic material joining the sections; or
wherein the plural sections (401, 402, 403) are mechanically joined by a water-tight join.

7. The container of any one of the preceding claims,
wherein the floor (203) and/or at least one of the walls (204, 205, 206) comprises a bend,
wherein the bend (404) is coincident with a groove in the section extending partially through a thickness of the section; or
wherein the floor (203) and/or at least one of the walls (204, 205, 206) comprises a bend (404),
wherein the bend is coincident with a groove in the section extending partially through a thickness of the section; and wherein the groove is filled with plastic material joining portions of the floor and/or the wall on opposing sides of the bend.

8. The container of any one of the preceding claims,
mounted on a road-going vehicle (101) for transporting bulk material; or
mounted on a road-going vehicle (101) for transporting bulk material; and comprising a lifting mechanism (105) for lifting the container relative to a chassis of the road-going vehicle to cause the container to tip to facilitate tipping of bulk material from the container.

9. A method of constructing a container for holding bulk material, the method comprising:
obtaining a floor and walls formed of plastic (703),
obtaining a frame for supporting the floor and walls (702), wherein the frame comprises a plurality of spaced-apart metal frame members separated by open areas,
attaching the floor and walls to the frame members (704) to span the open areas, such that the floor and the walls are supported by the frame to bound a volume suitable for holding bulk material;
attaching the floor to a frame member of the frame by at least one fixing extending through the floor to the frame member such that an end of the fixing is countersunk into the floor (802), and
filling the countersink with plastic to cover the end of the fixing (803).

10. The method of claim 9, wherein the attaching the floor and walls to the frame members (704) comprises releasably attaching the floor and walls to the frame members; or
wherein the obtaining a floor and walls (703) comprises obtaining a floor and walls formed in plural sections, and the attaching the floor and walls to the frame members comprises individually mounting the plural sections on the frame members to be supported thereby and attaching the plural sections to the frame members.

11. The method of claims 9 or 10, wherein the obtaining a floor and walls (703) comprises obtaining a floor and walls formed in plural sections, and the method comprises mechanically joining the plural sections.

12. The method of claim 11, wherein the method comprises individually mounting the plural sections on the frame members (801) to be supported thereby and mechanically joining the plural sections in-situ on the frame members; or
wherein the mechanically joining the plural sections comprises plastic-welding the plural sections together; or
wherein the mechanically joining the plural sections comprises plastic-welding the plural sections together; and wherein the plastic-welding the plural sections together comprises mounting a plastic-welder located on a track in the container and moving the plastic welder along the track to progressively plastic- weld the plural sections together; or
wherein the obtaining a floor and walls formed in plural sections comprises shaping edges of the plural sections to define a tapered cavity when abutted, the mounting the plural sections on the frame comprises abutting the plural sections such that a tapered cavity is defined between abutting edges, and the mechanically joining the plural sections comprises filling the cavity with plastic material to join the sections.

13. The method of claim 9, wherein the obtaining a floor and walls comprises cutting a groove in the floor and/or at least one of the walls that extends partially through the thickness of the piece, and bending the piece about the groove to form a bent portion; or
wherein the obtaining a floor and walls comprises cutting a groove in the floor and/or at least one of the walls that extends partially through the thickness of the piece, and bending the piece about the groove to form a bent portion; and further comprising filling the groove with plastic material to join portions of the piece on opposing sides of the bend.

14. The method of claim 9, comprising constructing the container on a road-going vehicle for transporting bulk material.

## Patentansprüche

1. Behälter (104) zum Aufnehmen von Schüttgut, umfassend: einen Boden (203) und Wände (204, 205, 206), die aus Kunststoff gebildet sind, und einen Rahmen (202), der den Boden und die Wände trägt, wobei der Rahmen (202) eine Vielzahl von voneinander beabstandeten Metallrahmenelementen (301, 302, 303) umfasst, die durch offene Bereiche (304) voneinander getrennt sind, und der Boden (203) und die Wände (204, 205, 206) an den Rahmenelementen befestigt sind und die offenen Bereiche überspannen, um ein Volumen zu begrenzen, das zum Aufnehmen von Schüttgut geeignet ist, wobei der Boden (203) an einem Rahmenelement mittels mindestens eine Befestigung (507) befestigt ist, die sich durch den Boden (203) zu dem Rahmenelement erstreckt, **dadurch gekennzeichnet, dass** ein Ende der Befestigung in den Boden versenkt ist und die Versenkung mit Kunststoff gefüllt ist, um das Ende der Befestigung abzudecken (508).

2. Behälter nach Anspruch 1,
wobei der Boden (203) und die Wände (204, 205, 206) aus Polyethylen hoher Dichte (HDPE) gebildet sind; oder
wobei die Rahmenelemente (301, 302, 303) Kastenabschnitte umfassen.

3. Behälter nach Anspruch 1, wobei die Versenkung mit demselben Kunststoff wie der Boden (203) gefüllt ist.

4. Behälter nach einem der vorhergehenden Ansprüche, wobei der Boden (203) und die Wände (204, 205, 206) lösbar an den Rahmenelementen (301, 302, 303) befestigt sind.

5. Behälter nach einem der vorhergehenden Ansprüche, wobei der Boden (203) und die Wände (204, 205, 206) mehrere Abschnitte (401, 402, 403) aus Kunststoff umfassen, wobei die mehreren Abschnitte aus Kunststoff mechanisch miteinander verbunden sind.

6. Behälter nach Anspruch 5,
wobei die mehreren Abschnitte (401, 402, 403) mechanisch durch Kunststoffschweißen miteinander verbunden sind; oder
wobei die mehreren Abschnitte (401, 402, 403) an aufeinanderstoßenden Kanten mechanisch miteinander verbunden sind und die aufeinanderstoßenden Kanten so geformt sind, dass sie einen sich verjüngenden Hohlraum zwischen den aufeinanderstoßenden Kanten definieren, und der sich verjüngende Hohlraum mit Kunststoffmaterial gefüllt ist, das die Abschnitte miteinander verbindet; oder
wobei die mehreren Abschnitte (401, 402, 403) mechanisch durch eine wasserdichte Verbindung miteinander verbunden sind.

7. Behälter nach einem der vorhergehenden Ansprüche,
wobei der Boden (203) und/oder mindestens eine der Wände (204, 205, 206) eine Biegung umfasst,
wobei die Biegung (404) mit einer Nut in dem Abschnitt zusammenfällt, die sich teilweise durch eine Dicke des Abschnitts erstreckt; oder
wobei der Boden (203) und/oder mindestens eine der Wände (204, 205, 206) eine Biegung (404) umfasst,
wobei die Biegung mit einer Nut in dem Abschnitt zusammenfällt, die sich teilweise durch eine Dicke des Abschnitts erstreckt; und wobei die Nut mit Kunststoffmaterial gefüllt ist, das Teile des Bodens und/oder der Wand auf gegenüberliegenden Seiten der Biegung miteinander verbindet.

8. Behälter nach einem der vorhergehenden Ansprüche,
angebracht auf einem straßentauglichen Fahrzeug (101) zum Transportieren von Schüttgut; oder
angebracht auf einem straßentauglichen Fahrzeug (101) zum Transportieren von Schüttgut; und umfassend einen Hebemechanismus (105) zum Anheben des Behälters relativ zu einem Fahrgestell des straßentauglichen Fahrzeugs, um dem Behälter zum Kippen zu bringen und so das Kippen von Schüttgut aus dem Behälter zu erleichtern.

9. Verfahren zum Konstruieren eines Behälters zum Aufnehmen von Schüttgut, das Verfahren umfassend:
Erlangen eines Bodens und von Wänden, gebildet aus Kunststoff (703),
Erlangen eines Rahmens zum Tragen des Bodens und der Wände (702), wobei der Rahmen eine Vielzahl von voneinander beabstandeten Metallrahmenelementen umfasst, die durch offene Bereiche getrennt sind,
Befestigen des Bodens und der Wände an den Rahmenelementen (704), um die offenen Bereiche derart zu überspannen, dass der Boden und die Wände von dem Rahmen getragen werden, um ein Volumen zu begrenzen, das zum Aufnehmen von Schüttgut geeignet ist;
Befestigen des Bodens an einem Rahmenelement des Rahmens durch mindestens eine Befestigung, die sich durch den Boden zu dem Rahmenelement erstreckt, derart, dass ein Ende der Befestigung in den Boden versenkt ist (802), und
Füllen der Versenkung mit Kunststoff, um das Ende der Befestigung abzudecken (803).

10. Verfahren nach Anspruch 9, wobei das Befestigen des Bodens und der Wände an den Rahmenelementen (704) das lösbare Befestigen des Bodens und der Wände an den Rahmenelementen umfasst; oder
wobei das Erlangen eines Bodens und von Wänden (703) das Erlangen eines Bodens und von Wänden umfasst, gebildet in mehreren Abschnitten, und das Befestigen des Bodens und der Wände an den Rahmenelementen das einzelne Befestigen der Abschnitte an den Rahmenelementen, um dadurch getragen zu werden, und das Befestigen der mehreren Abschnitte an den Rahmenelementen umfasst.

11. Verfahren nach Anspruch 9 oder 10, wobei das Erlangen eines Bodens und von Wänden (703) das Erlangen eines Bodens und von Wänden umfasst, gebildet in mehreren Abschnitten, und das Verfahren das mechanische Verbinden der mehreren Abschnitte umfasst.

12. Verfahren nach Anspruch 11, wobei das Verfahren das individuelle Anbringen der mehreren Abschnitte an den Rahmenelementen (801), um dadurch getragen zu werden, und das mechanische Verbinden der mehreren Abschnitte in situ an den Rahmenelementen umfasst; oder
wobei das mechanische Verbinden der mehreren Abschnitte das Kunststoffschweißen der mehreren Abschnitte aneinander umfasst; oder
wobei das mechanische Verbinden der mehreren Abschnitte das Kunststoffschweißen der mehreren Abschnitte aneinander umfasst; und wobei das Kunststoffschweißen der mehreren Abschnitte aneinander das Anbringen eines Kunststoffschweißgeräts, das sich auf einer Schiene in dem Behälter befindet, und das Bewegen des Kunststoffschweißgeräts entlang der Schiene zum fortschreitenden Kunststoffschweißen der mehreren Abschnitte aneinander umfasst; oder
wobei das Erlangen eines Bodens und von Wänden, gebildet in mehreren Abschnitten, das Formen von Kanten der mehreren Abschnitte umfasst, sodass sie beim Aufeinanderstoßen einen sich verjüngenden Hohlraum definieren, wobei das Anbringen der mehreren Abschnitte an dem Rahmen umfasst, dass die mehreren Abschnitte derart aufeinanderstoßen, dass ein sich verjüngender Hohlraum zwischen aufeinanderstoßenden Kanten definiert wird, und das mechanische Verbinden der mehreren Abschnitte das Füllen des Hohlraums mit Kunststoffmaterial umfasst, um die Abschnitte zu verbinden.

13. Verfahren nach Anspruch 9, wobei das Erlangen eines Bodens und von Wänden das Schneiden einer Nut in den Boden und/oder mindestens eine der Wände, die sich teilweise durch die Dicke des Stücks erstreckt, und das Biegen des Stücks um die Nut zum Bilden eines gebogenen Teils umfasst; oder
wobei das Erlangen eines Bodens und von Wänden das Schneiden einer Nut in den Boden und/oder mindestens eine der Wände, die sich teilweise durch die Dicke des Stücks erstreckt, und das Biegen des Stücks um die Nut zum Bilden eines gebogenen Teils umfasst; und ferner umfassend das Füllen der Nut mit Kunststoffmaterial, um Teile des Stücks auf gegenüberliegenden Seiten der Biegung zu verbinden.

14. Verfahren nach Anspruch 9, umfassend das Konstruieren des Behälters auf einem straßentauglichen Fahrzeug zum Transportieren von Schüttgut.

## Revendications

1. Récipient (104) destiné à contenir un matériau en vrac, comprenant : un plancher (203) et des parois (204, 205, 206) formés de plastique, et un cadre (202) soutenant le plancher et les parois, dans lequel le cadre (202) comprend une pluralité d'éléments de cadre (301, 302, 303) métalliques espacés séparés par des zones ouvertes (304), et le plancher (203) et les parois (204, 205, 206) sont attachés aux éléments de cadre et couvrent les zones ouvertes afin de délimiter un volume approprié pour contenir un matériau en vrac, dans lequel le plancher (203) est attaché à un élément de cadre par au moins une fixation (507) s'étendant à travers le plancher (203) vers l'élément de cadre, **caractérisé en ce qu'**une extrémité de la fixation est fraisée dans le plancher, et la fraisure est remplie de plastique afin de recouvrir (508) l'extrémité de la fixation.

2. Récipient selon la revendication 1,
dans lequel le plancher (203) et les parois (204, 205, 206) sont formés de polyéthylène haute densité (HDPE) ; ou
dans lequel les éléments de cadre (301, 302, 303) comprennent des sections en caisson.

3. Récipient selon la revendication 1, dans lequel la fraisure est remplie du même plastique que le plancher (203).

4. Récipient selon l'une quelconque des revendications précédentes, dans lequel le plancher (203) et les parois (204, 205, 206) sont attachés de manière libérable aux éléments de cadre (301, 302, 303).

5. Récipient selon l'une quelconque des revendications précédentes, dans lequel le plancher (203) et les parois (204, 205, 206) comprennent plusieurs sections (401, 402, 403) de plastique, dans lequel les plusieurs sections de plastique sont reliées mécaniquement.

6. Récipient selon la revendication 5,
dans lequel les plusieurs sections (401, 402, 403) sont reliées mécaniquement par soudage plastique ; ou
dans lequel les plusieurs sections (401, 402, 403) sont reliées mécaniquement au niveau de bords de butée, les bords de butée sont façonnés de sorte à définir une cavité conique entre les bords de butée, et la cavité conique est remplie de matière plastique reliant les sections ; ou
dans lequel les plusieurs sections (401, 402, 403) sont reliées mécaniquement par un raccord étanche à l'eau.

7. Récipient selon l'une quelconque des revendications précédentes,
dans lequel le plancher (203) et/ou au moins l'une des parois (204, 205, 206) comprend un coude,
dans lequel le coude (404) coïncide avec une rainure dans la section s'étendant partiellement à travers une épaisseur de la section ; ou
dans lequel le plancher (203) et/ou au moins l'une des parois (204, 205, 206) comprend un coude (404),
dans lequel le coude coïncide avec une rainure dans la section s'étendant partiellement à travers une épaisseur de la section ; et dans lequel la rainure est remplie de matière plastique reliant des parties du plancher et/ou de la paroi sur des côtés opposés du coude.

8. Récipient selon l'une quelconque des revendications précédentes,
monté sur un véhicule routier (101) pour transporter un matériau en vrac ; ou
monté sur un véhicule routier (101) pour transporter un matériau en vrac ; et comprenant un mécanisme de levage (105) destiné à soulever le récipient par rapport à un châssis du véhicule routier pour amener le récipient à basculer afin de faciliter le basculement de matériau en vrac du récipient.

9. Procédé de fabrication d'un récipient destiné à contenir un matériau en vrac, le procédé comprenant :
l'obtention d'un plancher et de parois formés de plastique (703),
l'obtention d'un cadre destiné à soutenir le plancher et les parois (702), dans lequel le cadre comprend une pluralité d'éléments de cadre métalliques espacés séparés par des zones ouvertes,
le rattachement du plancher et des parois aux éléments de cadre (704) afin de couvrir les zones ouvertes, de sorte que le plancher et les parois soient soutenus par le cadre afin de délimiter un volume approprié pour contenir un matériau en vrac ;
le rattachement du plancher à un élément de cadre du cadre par au moins une fixation s'étendant à travers le plancher vers l'élément de cadre de sorte qu'une extrémité de la fixation soit fraisée dans le plancher (802), et
le remplissage de la fraisure avec du plastique afin de recouvrir l'extrémité de la fixation (803).

10. Procédé selon la revendication 9, dans lequel le rattachement du plancher et des parois aux éléments de cadre (704) comprend le rattachement libérable du plancher et des parois aux éléments de cadre ; ou
dans lequel l'obtention d'un plancher et de parois (703) comprend l'obtention d'un plancher et de parois formés de plusieurs sections, et le rattachement du plancher et des parois aux éléments de cadre comprend le montage individuel des plusieurs sections sur les éléments de cadre à soutenir par celles-ci et le rattachement des plusieurs sections aux éléments de cadre.

11. Procédé selon les revendications 9 ou 10, dans lequel l'obtention d'un plancher et de parois (703) comprend l'obtention d'un plancher et de parois formés de plusieurs sections, et le procédé comprend la liaison mécanique des plusieurs sections.

12. Procédé selon la revendication 11, dans lequel le procédé comprend le montage individuel des plusieurs sections sur les éléments de cadre (801) à soutenir par celles-ci et la liaison mécanique des plusieurs sections in situ sur les éléments de cadre ; ou
dans lequel la liaison mécanique des plusieurs sections comprend le soudage plastique des plusieurs sections ensemble ; ou
dans lequel la liaison mécanique des plusieurs sections comprend le soudage plastique des plusieurs sections ensemble ; et dans lequel le soudage plastique des plusieurs sections ensemble comprend le montage d'une soudeuse plastique située sur une piste dans le récipient et le déplacement de la soudeuse plastique le long de la piste afin de souder progressivement en plastique les plusieurs sections ensemble ; ou
dans lequel l'obtention d'un plancher et de parois formés de plusieurs sections comprend le façonnage de bords des plusieurs sections afin de définir une cavité conique lorsqu'elles sont en butée, le montage des plusieurs sections sur le cadre comprend la mise en butée des plusieurs sections de sorte qu'une cavité conique soit définie entre des bords de butée, et la liaison mécanique des plusieurs sections comprend le remplissage de la cavité avec une matière plastique afin de relier les sections.

13. Procédé selon la revendication **9,** dans lequel l'obtention **d'un** plancher et de parois comprend la découpe **d'une** rainure dans le plancher et/ou au moins l'une des parois qui s'étend partiellement à travers l'épaisseur de la pièce, et le pliage de la pièce autour de la rainure afin de former une partie courbée ; ou
dans lequel l'obtention d'un plancher et de parois comprend la découpe **d'une** rainure dans le plancher et/ou au moins l'une des parois qui s'étend partiellement à travers l'épaisseur de la pièce, et le pliage de la pièce autour de la rainure afin de former une partie courbée ; et comprenant en outre le remplissage de la rainure avec une matière plastique afin de relier des parties de la pièce sur des côtés opposés du coude.

14. Procédé selon la revendication 9, comprenant la fabrication du récipient sur un véhicule routier pour transporter un matériau en vrac.
